# EUROPEAN PATENT SPECIFICATION

(11) **EP 4 673 670 B1**
(45) Date of publication and mention of the grant of the patent: **21.10.2026**
(21) Application number: 23721954.8
(22) Date of filing: 28.04.2023
(51) Int. Cl.: F16J 9/00, F16J 9/12, F16J 9/14, F16J 9/20, F16J 15/34

(54) **PISTON RINGS FOR STEAM TURBINE VALVES AND PISTON RING ASSEMBLIES**
KOLBENRINGE FÜR DAMPFTURBINENVENTILE UND KOLBENRINGANORDNUNGEN
SEGMENTS DE PISTON POUR VANNES DE TURBINE À VAPEUR ET ENSEMBLES SEGMENTS DE PISTON

(43) Date of publication of application: 07.01.2026
(73) Proprietor: GE Vernova Technology GmbH, 5400 Baden (CH)
(72) Inventor: REIGL, Martin, 5400 Baden (CH)
(74) Representative: Wesela-Bauman, Grzegorz
(86) International application number: PCT/EP2023/061343
(87) International publication number: WO 2024/223059

(56) References cited:
- JP-B2- 4 537 912
- US-A- 3 100 647
- US-A- 5 012 841
- US-A1- 2009 179 386
- US-A1- 2012 304 854

## Description

### TECHNICAL FIELD

The present disclosure relates to piston rings for steam turbine valves, and particularly relates to piston rings for butterfly steam turbine valves.

### BACKGROUND

Piston rings for steam turbine valves are known to provide sealing between a part of a steam turbine in which there is a high steam pressure and a part with lower steam pressure. Piston rings for steam turbines valves are a known alternative for mechanical seals or graphite packings. Said mechanical seals have complex internal structure when compared to the structure of piston rings for steam turbine valves. Said graphite packings are axially compressed, need to be retightened regularly and lead to a high friction load on the moving valve stem.

In particular, split piston rings for steam turbine valves may be used for this purpose. Such split piston rings have a first ring body end which faces a second ring body end. The interruption of the piston ring on the circumference may also be called a ring gap. It should be noted that the ring gap in normal operation does not include overlapping ring elements. Since the ring gap does not close completely when installed in order to be able to compensate for thermal expansion and in order to allow an elastic spring-back, there is always a certain amount of leakage. Said elastic spring-back is an essential part of this type of rings as it allows for installation and is part of their working principle. The leakages cannot be controlled as the size of the gap is controlled, for example, by said thermal expansion/contraction of the piston ring, i.e. the amount of leakage can vary during operation.

Those split piston rings have a favorable steam pressure distribution from ring to ring when they are used in a set in a steam turbine valve. Specifically, there is a distribution of steam pressure among the split piston rings in the steam turbine valve which decreases the probability of malfunction of a single split piston ring in said valve. Therefore, valves, which include said split piston rings, are less prone to malfunction.

On the other hand, so-called "tight" piston rings are known. The tight piston rings avoid the circumferential gap between ends of the ring, since the first ring body end and the second ring body end overlap with each other. A set of tight piston rings in a steam turbine valve can have a large pressure load on a single piston out of said set. Namely, on the piston ring adjacent to the part of a steam turbine in which there is a high pressure. In other words, said single tight piston ring is under higher stress than other piston rings in that set. This contributes to a possibility of failure of said one tight piston ring and thus ultimately to failure of the steam turbine valve including said set of tight piston rings. Failure means significant leakage of steam from the part of the steam turbine in which there is a high pressure to a part in which there is lower pressure.

The present disclosure solves disadvantages of the prior art. The present disclosure provides examples/embodiments of improved piston rings and piston ring valves as well as valves with those improved piston rings. Said examples/embodiments have reduced or minimized leakage flows. Additionally, disclosed valves including those with those improved piston rings are less prone to malfunction and so they are more reliable. In further examples and embodiments, the number of piston rings needed in a specific installation may be reduced while avoiding an increase in leakage flow. A prior art piston ring is known from US 3 100 647 A, according to the preamble of claim 1.

### SUMMARY

In an aspect of the present disclosure, a piston ring for a steam turbine valve is provided, which comprises a ring body having a first overlap segment at a first end of the ring body, a middle segment, and a second overlap segment at a second end of the ring body. The first and second overlap segments each have a cross-section in the axial direction that is smaller than a cross-section in the axial direction of the middle segment of the ring body. The first and second overlap segments are configured to at least partially overlap with each other in a circumferential direction. The above-mentioned size of the cross-section of the first and second overlap cross segments ensures when the segments overlap, they are not protruding outside of the plane of the piston ring. Additionally, this configuration of overlap segments allows to create a tight connection in the piston ring that substantially prevents e.g., steam from leaking though this connection. The middle segment of the ring body further comprises at least one channel for leakage flow through the piston ring.

In accordance with this aspect, a piston ring is provided in which the amount of leakage flow across the piston ring and a corresponding pressure drop can be more precisely controlled than in prior art piston rings. Said precise control originates from the fact that the size of said at least one channel is directly related to the magnitude of leakage flow through the piston ring. The magnitude of leakage flow does not depend on temperature as in case of split piston rings. Additionally, this precise control allows to decide how much pressure load is put on the piston ring. This allows to safely increase the pressure load on the piston ring according to the invention beyond what is possible when such control is not in place. Ultimately, this allows to obtain higher level of sealing, i.e., the piston ring has reduced or minimized leakages when compared to leakages in the known piston rings. It should be noted that this surprising effect is obtained by counterintuitive structure of the piston ring as it combines features that allow leakage (forming at least one channel across the piston ring) with those preventing it (i.e., tight connection as explained above). The piston ring according to this aspect also provides a cheaper sealing than complex mechanical sealing. In other words, the leakage flow is for controlling of load and / or sealing of the piston ring or the total size of said at least one channel is for controlling of load and / or sealing of the piston ring.

Said at least one channel for leakage flow through the piston ring can include grooves and bores and is not limited to a pipe-like structure. In an embodiment that is easy-to-manufacture with required control over leakage flow, said at least one channel includes a groove and at least one axially extending bore, wherein the groove is extending radially in the piston ring, and wherein the groove is a notch provided at an axially outer side of the ring body.

In one embodiment, said at least one piston ring channel is a groove extending axially through the piston ring, and the groove is a notch provided at a radially outer side of the ring body. In another embodiment, said at least one channel is a groove extending radially through the piston ring, and wherein the groove is a notch provided at an axially outer side of the ring body. These structures of said at least one piston ring channel are easy to manufacture or to make on already existing piston ring. They also offer the most precise way to control the magnitude of the leakage flow as the size of these notches (also known as indents) is easy to be precisely controlled.

It is envisaged that the cross-section of said groove can be the same axially across the piston ring or may vary. In one embodiment, the cross-section of the groove increases across the piston ring. In another, the cross-section of the groove across the piston ring increases and then decreases or first increases and then decreases.

In an aspect of the present disclosure, a valve for a steam turbine including at least one piston ring for a steam turbine valve is provided. This can be two, three or more piston rings. In this valve, the piston rings are placed in receptacles and form pairs, each pair includes a piston ring and its receptacle. This valve can be placed between a first part and a second part of a steam turbine, wherein pressure in the first part is higher than in the second part. In one embodiment, this valve includes piston rings as defined in this disclosure. In another embodiment, each receptacle comprises at least one channel for leakage flow circumventing the piston ring. Said channel for leakage flow circumventing the piston ring works in the same way as the piston ring channel. It follows that any modifications described for the piston ring channel, can be applied to the channel for leakage flow circumventing the piston ring. In this embodiment, each piston ring is a tight piston ring which means that the piston ring comprises a ring body that comprises a first overlap segment at a first end of the ring body, a middle segment, and a second overlap segment at a second end of the ring body, wherein the first and second overlap segments each have a cross-section that is smaller than a cross-section of the middle segment of the ring body. The first and second overlap segments are configured to at least partially overlap with each other in a circumferential direction.

In embodiments, there can be two, three or more piston rings. It follows that there are two, three or more pairs of piston rings with receptacles thereof.

In embodiments, for each said pair at least one element from the group including:
- said at least one piston ring channel, and
- said at least one channel for leakage flow circumventing the piston ring,
is configured to maintain the same pressure load on each piston ring in the valve. For example, when there are only piston rings according to the invention, their piston ring channels are configured to maintain the same pressure load on each piston ring. These embodiments are less prone to malfunction and so they are more reliable. The skilled person knows that parameters of said piston ring channels (e.g., size) have to be individually adjusted and knows how to do that. In another example, each pair includes at least one channel for leakage flow circumventing the piston ring configured to maintain the same pressure load on each said piston ring. The skilled person knows that parameters of said channels for leakage flow circumventing the piston ring (e.g., size) have to be individually adjusted and knows how to do that. This example with said leakage flow circumventing the piston ring works best for tight piston rings.

In a further aspect, the valve is a butterfly valve. Other type of valves can also be used.

In yet a further aspect, a steam turbine is provided comprising such a butterfly valve or other valves as described herein. And in yet a further aspect, a fossil, waste-to-energy, renewable-energy, combined-cycle or nuclear powerplant including such a steam turbine is provided. Such steam turbines and power plants are less susceptible to malfunction due to more reliable construction of the valves and the piston rings.

In embodiments, the piston ring is a segmented piston ring. Segmented piston rings are typically called seals rings. In examples, the segmented piston ring is included in a valve, e.g., a valve spindle. Specifically, the valve spindle includes at least 5, 10, or at least 24 piston rings. As it is known to the skilled person, valve spindles are axially moving. Further examples include a rotating shaft of a valve or an axially moving valve stem, both including at least one said segmented piston ring. A valve can include at least one the piston rings according to the disclosure that is not said segmented piston ring and at least one said segmented piston ring. In examples, the piston ring can be included in a valve head and the segmented piston rings on at least one stem. Sealing a stem is to prevent or to limit leakages to the atmosphere. The valve heads are to prevent or limit leakages between high pressure parts and lower pressure parts.

In an aspect, a valve diffuser includes at least one of the piston ring and the segmented ring disclosed in this disclosure. This valve diffuser expresses reduced wear of diffuser ends due to even distribution of pressure among said at least one piston ring and / or said at least one segmented ring. The reduction of wear comes from reduction in surface pressure of piston rings/segmented piston rings as this pressure acts on thermal movement of the diffuser to create wear. Less pressure means that any thermal movement do not generate as much wear and, ultimately, less pressure means that there is less wear.

Additional objects, advantages and features of embodiments of the present disclosure will become apparent to those skilled in the art upon examination of the description, or may be learned by practice.

### BRIEF DESCRIPTION OF THE DRAWINGS

Figure 1 schematically illustrates a portion of a butterfly valve comprising a piston ring assembly according to an example;
Figures 2A - 2F schematically illustrate examples of piston rings according to the present disclosure comprising an axially extending groove constituting part of a channel for leakage flow at a radial side of the piston ring facing the cylinder;
Figures 3A - 3D schematically illustrate further examples of piston rings according to the present disclosure having radially extending grooves;
Figures 4A - 4E schematically illustrate further examples of piston rings according to the present disclosure having axial bores and radially extending grooves; and
Figures 5A - 5D schematically illustrates examples of piston ring assemblies wherein the cylinder or the piston comprise grooves for establishing a controlled leakage flow.

### DETAILED DESCRIPTION OF EXAMPLES

Reference now will be made in detail to embodiments of the disclosure, one or more examples of which are illustrated in the drawings. Each example is provided by way of explanation, not as a limitation. In fact, it will be apparent to those skilled in the art that various modifications and variations can be made in the present disclosure without departing from the scope or spirit of the teaching. For instance, features illustrated or described as part of one embodiment can be used with another embodiment to yield a still further embodiment. Thus, it is intended that the present disclosure covers such modifications and variations as come within the scope of the appended claims and their equivalents.

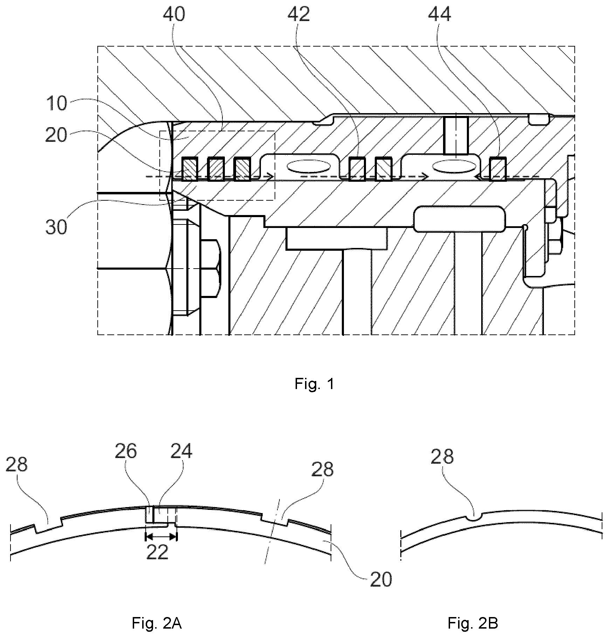

Figure 1 schematically illustrates a portion of a butterfly valve comprising a piston ring according to an example. A butterfly valve is a valve that isolates or regulates the flow of a fluid. The closing mechanism is a disk that rotates. The disk is mounted on a rotatable shaft. The shaft is rotated to change the position of the disk which may completely or partially block a fluid flow through a conduit.

Butterfly valves may be used in variety of machines e.g. in different stages of steam turbines, i.e. low pressure (LP), intermediate pressure (IP) or high pressure (HP) stages of a steam turbine. These examples include an LP section of a steam turbine.

Actuation of the butterfly valve in this example consists of a rotation of piston 10 with respect to cylinder 30. A suitable bearing (not shown), e.g. a double tapered roller bearing may be provided between piston and cylinder. Oil or other lubricant of the bearing, as well as gas flow may leak over the piston rings from a high-pressure side to a low-pressure side. The leakage is generally to be minimized and to this end a plurality of piston rings may be provided. The leakage flow is schematically illustrated in figure 1 with interrupted arrows.

In this example, three groups 40, 42, 44 of piston rings 20 are provided. In this example, a high-pressure side (or highest pressure side) is on the left hand side of the figure, whereas a lowest pressure point is in between the piston rings of group 42 and the piston ring of group 44.

In general, the goal of the piston rings is to reduce or minimize leakage flow. The leakage flow comes from the pressure difference. Depending on the pressure differential, the number of piston rings to reduce the leakage flow to an acceptable level may be determined.

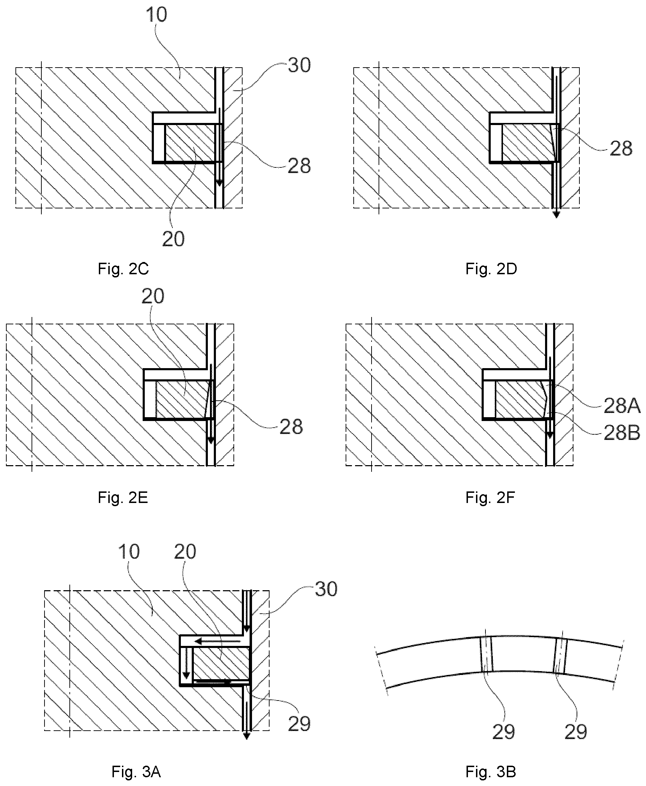

Figures 2A - 2F schematically illustrate different examples of piston rings according to the present disclosure. In figures 2A and 2B, the axial direction is perpendicular to the plane of the figures. In figures 2C - 2F, the axial direction corresponds to the plane of the figures.

A piston ring 20 comprises a ring body wherein the ring body comprises a first overlap segment 24 at a first end of the ring body, a middle segment, and a second overlap segment 26 at a second end of the ring body. The first and second overlap segments 24, 26 each have an axial cross-section that is smaller than an axial cross-section of the middle segment of the ring body, and they are configured to at least partially overlap with each other in a circumferential direction. The first 24 and second 26 overlap segments are thus configured to form an overlapping region 22. The maximum possible overlapping is indicated with reference sign 22. With varying thermal expansion, the extent to which the overlap segments actually overlap with each other may vary, but no axial gap with corresponding leakage flow is created because the overlap is maintained, i.e. the overlapping segments may slide over each other, but maintain sealing. This type of piston ring is also known as a "tight" piston ring.

In accordance with examples, the middle segment of the ring body comprises at least one channel for leakage flow axially through (across) the piston ring. In one example. There may be two or more channels. In one example, said channel is a groove 28. Rather than an uncontrolled gap for leakage flow as known in the prior art, in examples of the present disclosure, a leakage flow is allowed but it is precisely controlled and does not depend e.g., on the thermal expansion of the piston ring. In an example, at high pressure differences, several piston rings are used, and there is a leakage flow to have the pressure difference distributed over the rings. This prevents from damaging a single piston ring. The groove may be sized and shaped to optimize a pressure drop across the piston ring.

In examples, such as in figure 2A, the groove axially extends from a low-pressure side of the piston ring to a high-pressure side of the piston ring, and the groove is provided at a radially outer side of the ring body, i.e. at a side of the piston ring facing the cylinder. The channel / groove may have a variety of different cross-sections, e.g. rectangular as in figure 2A, square, polygonal, or circular or rounded as in figure 2B.

In examples, such as in figure 2A, the middle segment of the piston ring may comprise a first groove providing a first channel for leakage flow, and a second groove providing a different second channel for leakage flow. A piston ring may thus comprise more than one groove for controlled leakage flow. Such an arrangement may be particularly suitable for piston rings at or a high-pressure end of a sealing.

The leakage flow across the piston ring 20 is schematically illustrated with an arrow in the example of figure 2C. In the example of figure 2C, the groove 28 has a substantially constant cross-section. In other examples, e.g. in the examples of figures 2D and 2E, the groove 28 may have a non-constant cross-section between the low-pressure side and the high-pressure side. I.e., a radial and/or a circumferential dimension of the groove 28 may vary along an axial direction in such other examples. An aspect of a non-constant cross-section is that the minimum cross-section may only constitute a small portion and this may be more easily manufactured. The smallest cross-section may be more robust against blockage by dirt, when it is adjacent to a larger cross-section, compared to a piston ring wherein the smallest cross-section is extended over the whole length, as the dirt can more easily move through the channel with a larger cross-section instead of sticking there.

In some examples, like in figure 2E, the cross-section of the groove may increase from the high-pressure side to the low-pressure side. I.e., a radial dimension of the groove 28 may increase, or e.g. a radial dimension of the piston ring 20 may decrease, along an axial direction towards the low pressure side of the piston ring 20. In this example, the groove tapers outwardly in a direction of leakage flow. An aspect of an outwards taper is that dirt will have less of a tendency to stick inside the leakage groove, as the groove gets larger in cross section along the flow direction. A further aspect is of aerodynamic nature: An outwards taper acts aerodynamically as a diffuser and reduces the velocity of the leakage flow, which reduces or avoids erosion damage on cylinder, piston and piston ring.

In other examples, like in figure 2D, the cross-section of the groove 28 decreases from the high-pressure side to the low-pressure side. I.e., a radial and/or a circumferential dimension of the groove 28 decreases along an axial direction towards the low-pressure side of the piston ring 20. And in yet further examples, as for instance in the example of figure 2F, the cross-section of the groove decreases along a first portion 28A of the groove, and increases along a second portion 28B of the groove.

In the examples of figures 2C - 2F, the grooves providing the controlled leakage flow were shown to extend axially from a high-pressure side to a low-pressure side.

However, other examples are possible. The groove may be a radially extending groove 29 provided at a low-pressure side of the piston ring 20 such as in the examples of figure 3A - 3D. A leakage flow may be established as shown in figure 3A, from a space radially between the piston 10 and cylinder 30, through an annular receptacle in piston 10 wherein the piston ring 20 is located and through groove 29 to the space radially between the piston 10 and cylinder 30 on the low pressure side of the piston ring.

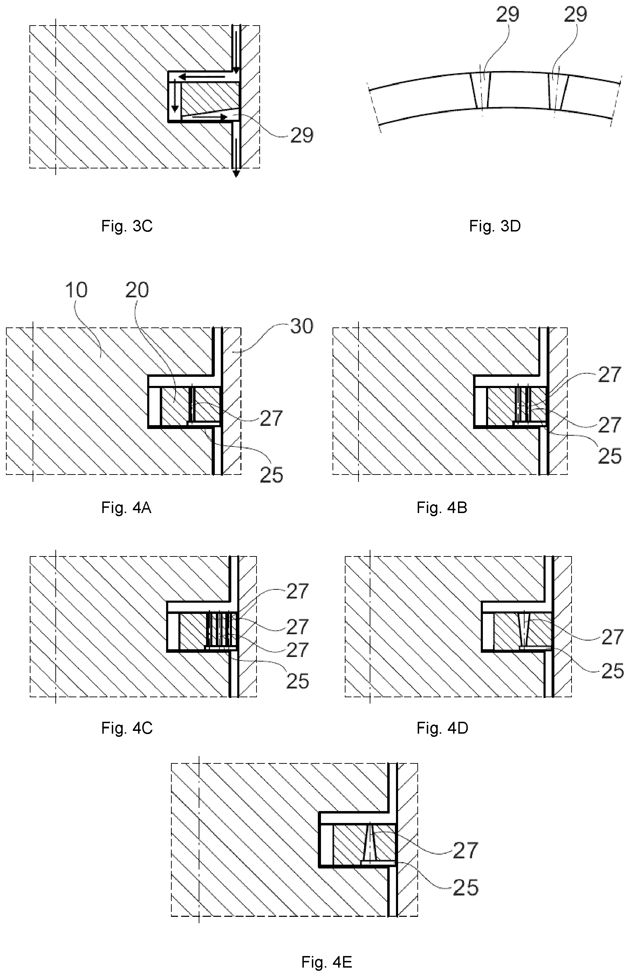

In the example of figures 3A and 3B (showing a cross-sectional view and side of piston ring 20 respectively), the cross-section of groove 29 may be substantially constant. In other examples, such as in the example of figures 3C and 3D, the radially extending groove 29 may have a varying cross-section. I.e., an axial and/or a circumferential dimension of the groove 29 may vary along a radial direction.

In the illustrated example, the radially extending groove tapers outwardly in the flow direction of the leakage flow. I.e., a circumferential dimension (and possibly also an axial dimension) of the groove 29 may increase along a radial direction of advancement of the leakage flow. The effects of tapering grooves may be the same as described for the axially extending grooves. In other non-illustrated examples, the radially extending grooves may taper inwards in flow direction, e.g. an axial and/or circumferential dimension of the groove 29 may decrease along a radial direction of advancement the leakage flow, or may comprise a portion tapering inward, and a portion tapering outward downstream thereof.

A shape of the radially extending groove 29 may be any suitable shape as mentioned before with respect to figure 2, e.g. rounded, circular, oval, semi-circular, square, rectangular, other polygonal shapes etc.

In the examples illustrated in figure 3, see particularly figures 3B and 3D, the middle segment of the piston ring may comprise more than one groove for leakage flow. In examples, a first groove providing a first channel for leakage flow may have different dimensions than a second groove providing a different second channel for leakage flow.

In some examples, a piston ring 20 may comprise one or more axial bores 27 through the piston ring and connected with the radially extending groove 25, such as in the examples of figures 4A - 4E. In the example of figure 4A, a single bore 27 through the piston ring 20 fluidly connects to a radially extending groove 25. As opposed to the radially extending grooves illustrated in figures 3A and 3C, the radially extending groove does not extend completely radially across the piston ring. A leakage flow may thus be established through the axial bore and the groove 25. Figures 4B and 4C are similar to the example of figure 4A, except for the different number of bores.

As illustrated in figures 4D and 4E, the groove 25 and/or the axial bores 27 may have a variable cross-section. A radial dimension of a bore 27 may therefore vary, e.g. decrease towards a low pressure side of the piston ring 20 in figure 4D or increase towards a low pressure side of the piston ring in figure 4E, along an axial direction, or first decrease and then increase. The effect of a tapering or otherwise varying cross-section may generally be the same as described before.

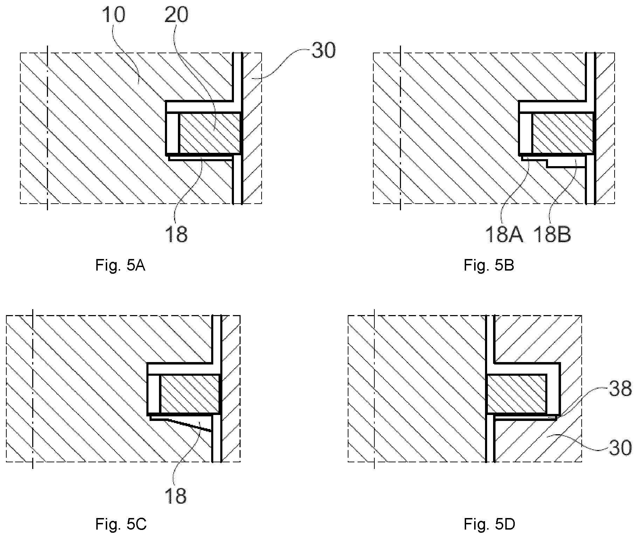

Figures 5A - 5D schematically illustrate a piston ring assembly comprising a piston 10, and a cylinder 30. The piston 10 may be located in a bore of the cylinder 30. The piston ring assembly further comprises an annular piston ring 20 located in an annular receptacle of the piston or the cylinder. The piston ring 20 is configured to substantially seal a radial space between the piston 10 and the cylinder 30. In the examples of figures 5A - 5C, the piston ring 20 is located in an annular receptacle of the piston. In the example of figure 5D, the piston ring is provided in an annular receptacle of the cylinder 30.

The ring body of the piston ring comprises a first overlap segment at a first end of the ring body, a middle segment, and a second overlap segment at a second end of the ring body, wherein the first and second overlap segments each have a cross-section that is smaller than a cross-section of the middle segment of the ring body. The first and second overlap segments are configured to circumferentially overlap with each other, and form an overlapping region 22, see for example figure 2A. A tight piston ring is thus provided avoiding a gap which varying dimensions in a circumferential direction between the first end and second end of the ring body which face each other.

The annular receptacle of the piston or the cylinder, and/or the piston ring, include at least one groove which is circumferentially outside the overlapping region 22 to provide a channel for leakage flow axially across the annular piston ring 20. I.e., the annular receptacle which may be on the piston 10 or on the cylinder 30 may comprise at least a groove, and/or the piston ring 20 may comprise at least a groove.

The annular piston ring 20 is arranged in an annular receptacle of the piston in figure 5A and the annular receptacle of the piston comprises a radially extending groove 18 at a low-pressure side of the piston ring. In the example of figure 5A, the radially extending groove may have a substantially constant cross-section.

In the example of figure 5B, the radially extending groove in the piston has a variable cross-section. In this example, the radially extending groove comprises a first portion 18A with a first cross-section, a second portion 18B with a second cross-section and a step between the first and the second portions. A stepped portion may be more easily machined in the piston than a tapering portion while providing similar effects.

In examples however, the radially extending groove in the piston may have a tapering cross-section, e.g. a tapering cross-section which is divergent in a direction of the leakage flow as shown in figure 5C. The other variations in terms of cross-section as shown in the previous figures may also be used when the groove is provided in the piston. For example, a tapering cross-section may be convergent in a direction of the leakage flow or may be convergent and divergent.

In the example of figure 5D, the annular piston ring 20 is arranged in an annular receptacle of the cylinder and the annular receptacle of the cylinder comprises a radially extending groove 38 at a low-pressure side of the piston ring. Also such a groove may have a varying cross-section, e.g. tapering outwards and/or inwards or having a stepped portion as generally illustrated herein.

In arrangements such as the one shown in figure 1, a piston ring assembly may comprise a plurality of axially separated annular receptacles in the piston 10 (or in the cylinder), and an annular piston ring 20 may be located in each of the annular receptacles. A groove of the at least one groove may particularly be provided at the receptacle or the piston ring that is located closest to the high-pressure side of the piston ring assembly in order to control the pressure drop across the piston ring.

The piston ring assembly may comprise a plurality of axially separated annular receptacles, and an annular piston ring may be located in each of the annular receptacles, and grooves may be provided at at least two of the receptacles or piston rings. The two receptacles or piston rings may be adjacent to each other. And in examples, the grooves may have different cross-sections to provide an overall control of leakage flow and pressure drop which may be tailored in accordance with circumstances.

This written description uses examples to disclose the teaching, including the preferred embodiments, and also to enable any person skilled in the art to practice the teaching, including making and using any devices or systems and performing any incorporated methods. The patentable scope is defined by the claims, and may include other examples that occur to those skilled in the art. Such other examples are intended to be within the scope of the claims if they have structural elements that do not differ from the literal language of the claims, or if they include equivalent structural elements with insubstantial differences from the literal languages of the claims. Aspects from the various embodiments and examples described, as well as other known equivalents for each such aspects, can be mixed and matched by one of ordinary skill in the art to construct additional embodiments, examples and techniques in accordance with principles of this application that are herein disclosed. If reference signs related to drawings are placed in parentheses in a claim, they are solely for attempting to increase the intelligibility of the claim, and shall not be construed as limiting the scope of the claim.

## Claims

1. A piston ring (20) for a steam turbine valve comprising a piston (10) and a cylinder (30), where the piston ring is configured for sealing a radial space between a piston and a cylinder and comprises a ring body, wherein
the ring body comprises a first overlap segment (24) at a first end of the ring body, a middle segment, and a second overlap segment (26) at a second end of the ring body, wherein
the first and second overlap segments each have a cross-section that is smaller than a cross-section of the middle segment of the ring body, and wherein
the first and second overlap segments are configured to at least partially overlap with each other in a circumferential direction, **characterized in that**
the middle segment of the ring body comprises at least one piston ring channel (28) for leakage flow, the piston ring channel extending from a space radially between the piston and the cylinder at a high pressure side to a space radially between the piston and the cylinder at a low pressure side and through the piston ring for controlling of a load and / or sealing of the piston ring.

2. The piston ring for a steam turbine valve according to claim 1, wherein said at least one piston ring channel is a groove extending axially through the piston ring, and wherein the groove is a notch provided at a radially outer side of the ring body.

3. The piston ring according to claim 1, wherein said at least one piston ring channel is a groove extending radially through the piston ring, and wherein the groove is a notch provided at an axially outer side of the ring body.

4. The piston ring according to any of claims 2-3, wherein the cross-section of the groove increases across the piston ring.

5. The piston ring according to any of claims 2-3, wherein the cross-section of the groove across the piston ring increases and then decreases or first increases and then decreases.

6. The piston ring according to claim 1, wherein said at least one piston ring channel includes a groove and at least one axially extending bore, wherein the groove is extending radially in the piston ring, and wherein the groove is a notch provided at an axially outer side of the ring body.

7. The piston ring according to any of claims 1-6, wherein said piston ring is a segmented piston ring.

8. A valve for a steam turbine including at least one piston ring for a steam turbine valve, wherein the valve comprises a piston and a cylinder, and the piston ring is configured for sealing a radial space between a piston and a cylinder, wherein
the piston ring comprises a ring body, wherein
the ring body comprises a first overlap segment at a first end of the ring body, a middle segment, and a second overlap segment at a second end of the ring body, wherein
the first and second overlap segments each have a cross-section that is smaller than a cross-section of the middle segment of the ring body, and wherein
the first and second overlap segments are configured to at least partially overlap with each other in a circumferential direction, and each piston ring is placed in a receptacle of the piston or the cylinder,
wherein each pair of said receptacle and said piston ring includes at least one element from the group including: the piston ring as defined in any of claims 1-7, and the receptacle comprising at least one channel for leakage flow circumventing the piston ring, the channel extending from a space radially between the piston and the cylinder at a high pressure side to a space radially between the piston and the cylinder at a low pressure side and for controlling of a load and / or sealing of the piston ring.

9. The valve for a steam turbine according to claim 8 including two, three or more or at least 5, at least 10, or at least 24 said piston rings.

10. The valve for a steam turbine according to claim 9, wherein for each said pair, at least one element from the group including:
• said at least one piston ring channel for leakage flow through the piston ring for controlling of a load and / or sealing of the piston ring, and
• said at least one channel for leakage flow circumventing the piston ring,
is configured to maintain a same pressure load on each said piston ring.

11. The valve according to any of claims 8-10, wherein the valve is a butterfly valve.

12. A valve diffuser including the piston ring according to any of claims 1-7.

13. A steam turbine comprising the valve according to any of claims 8-11 or the valve diffuser according to claim 12.

14. A fossil, renewable-energy, waste-to-energy, combined-cycle or nuclear powerplant including the steam turbine according to claim 13.

## Patentansprüche

1. Kolbenring (20) für ein Dampfturbinenventil, umfassend einen Kolben (10) und einen Zylinder (30), wobei der Kolbenring zum Abdichten eines radialen Raums zwischen einem Kolben und einem Zylinder konfiguriert ist und einen Ringkörper umfasst, wobei
der Ringkörper ein erstes Überlappungssegment (24) an einem ersten Ende des Ringkörpers, ein mittleres Segment und ein zweites Überlappungssegment (26) an einem zweiten Ende des Ringkörpers umfasst, wobei
das erste und das zweite Überlappungssegment jeweils einen Querschnitt aufweisen, der kleiner als ein Querschnitt des mittleren Segments des Ringkörpers ist, und wobei
das erste und das zweite Überlappungssegment konfiguriert ist, um einander in einer Umfangsrichtung mindestens teilweise zu überlappen, **dadurch gekennzeichnet, dass**
das mittlere Segment des Ringkörpers mindestens einen Kolbenringkanal (28) für Leckströmung umfasst, wobei sich der Kolbenringkanal von einem Raum radial zwischen dem Kolben und dem Zylinder an einer Hochdruckseite zu einem Raum radial zwischen dem Kolben und dem Zylinder an einer Niederdruckseite und durch den Kolbenring zum Steuern einer Last und/oder Abdichtung des Kolbenrings erstreckt.

2. Kolbenring für ein Dampfturbinenventil nach Anspruch 1, wobei der mindestens eine Kolbenringkanal eine Nut ist, die sich axial durch den Kolbenring erstreckt, und wobei die Nut eine Kerbe ist, die an einer radial äußeren Seite des Ringkörpers bereitgestellt ist.

3. Kolbenring nach Anspruch 1, wobei der mindestens eine Kolbenringkanal eine Nut ist, die sich radial durch den Kolbenring erstreckt, und wobei die Nut eine Kerbe ist, die an einer axial äußeren Seite des Ringkörpers bereitgestellt ist.

4. Kolbenring nach einem der Ansprüche 2 bis 3, wobei der Querschnitt der Nut über den Kolbenring zunimmt.

5. Kolbenring nach einem der Ansprüche 2 bis 3, wobei der Querschnitt der Nut über den Kolbenring zunimmt und dann abnimmt oder zuerst zunimmt und dann abnimmt.

6. Kolbenring nach Anspruch 1, wobei der mindestens eine Kolbenringkanal eine Nut und mindestens eine sich axial erstreckende Bohrung umfasst, wobei sich die Nut radial in dem Kolbenring erstreckt, und wobei die Nut eine Kerbe ist, die an einer axial äußeren Seite des Ringkörpers bereitgestellt ist.

7. Kolbenring nach einem der Ansprüche 1 bis 6, wobei der Kolbenring ein segmentierter Kolbenring ist.

8. Ventil für eine Dampfturbine, einschließlich mindestens eines Kolbenrings für ein Dampfturbinenventil, wobei das Ventil einen Kolben und einen Zylinder umfasst, und der Kolbenring zum Abdichten eines radialen Raums zwischen einem Kolben und einem Zylinder konfiguriert ist, wobei
der Kolbenring einen Ringkörper umfasst, wobei
der Ringkörper ein erstes Überlappungssegment an einem ersten Ende des Ringkörpers, ein mittleres Segment und ein zweites Überlappungssegment an einem zweiten Ende des Ringkörpers umfasst, wobei
das erste und das zweite Überlappungssegment jeweils einen Querschnitt aufweisen, der kleiner als ein Querschnitt des mittleren Segments des Ringkörpers ist, und wobei
das erste und das zweite Überlappungssegment konfiguriert sind, um einander in einer Umfangsrichtung mindestens teilweise zu überlappen, und jeder Kolbenring in einer Aufnahme des Kolbens oder des Zylinders angeordnet ist,
wobei jedes Paar der Aufnahme und des Kolbenrings mindestens ein Element aus der Gruppe einschließt, einschließlich: des Kolbenrings nach einem der Ansprüche 1 bis 7, und der Aufnahme, umfassend mindestens einen Kanal für Leckströmung, die den Kolbenring umgeht, wobei sich der Kanal von einem Raum radial zwischen dem Kolben und dem Zylinder an einer Hochdruckseite zu einem Raum radial zwischen dem Kolben und dem Zylinder an einer Niederdruckseite und zum Steuern einer Last und/oder Abdichten des Kolbenrings erstreckt.

9. Ventil für eine Dampfturbine nach Anspruch 8, einschließlich zwei, drei oder mehr oder mindestens 5, mindestens 10 oder mindestens 24 der Kolbenringe.

10. Ventil für eine Dampfturbine nach Anspruch 9, wobei für jedes Paar mindestens ein Element aus der Gruppe, einschließt:
• den mindestens einen Kolbenringkanal für Leckströmung durch den Kolbenring zum Steuern einer Last und/oder Abdichtung des Kolbenrings, und
• den mindestens einen Kanal für eine Leckströmung, die den Kolbenring umgeht,
konfiguriert ist, um eine gleiche Druckbelastung auf jeden Kolbenring aufrechtzuerhalten.

11. Ventil nach einem der Ansprüche 8 bis 10, wobei das Ventil ein Drosselventil ist.

12. Ventildiffusor, einschließlich des Kolbenrings nach einem der Ansprüche 1 bis 7.

13. Dampfturbine, umfassend das Ventil nach einem der Ansprüche 8 bis 11 oder den Ventildiffusor nach Anspruch 12.

14. Fossiles, mit erneuerbaren Energien betriebenes, Müllverbrennungs-, Kombi- oder Kernkraftwerk, einschließlich der Dampfturbine nach Anspruch 13.

## Revendications

1. Segment de piston (20) destiné à une soupape de turbine à vapeur comprenant un piston (10) et un cylindre (30), dans lequel le segment de piston est conçu pour assurer l'étanchéité d'un espace radial entre un piston et un cylindre et comprend un corps de segment, dans lequel
le corps de segment comprend un premier segment de chevauchement (24) au niveau d'une première extrémité du corps de segment, un segment central, et un second segment de chevauchement (26) au niveau d'une seconde extrémité du corps de segment, dans lequel
les premier et second segments de chevauchement ont chacun une section transversale qui est inférieure à une section transversale du segment central du corps de segment, et dans lequel
les premier et second segments de chevauchement sont conçus pour se chevaucher au moins partiellement dans une direction circonférentielle, **caractérisé en ce que**
le segment central du corps de segment comprend au moins un canal de segment de piston (28) destiné à un écoulement de fuite, le canal de segment de piston s'étendant à partir d'un espace situé radialement entre le piston et le cylindre au niveau d'un côté haute pression vers un espace situé radialement entre le piston et le cylindre au niveau d'un côté basse pression et à travers le segment de piston pour la commande d'une charge et / ou l'étanchéité du segment de piston.

2. Segment de piston destiné à une soupape de turbine à vapeur selon la revendication 1, dans lequel ledit au moins un canal de segment de piston est une rainure s'étendant axialement à travers le segment de piston, et dans lequel la rainure est une encoche prévue au niveau d'un côté radialement externe du corps de segment.

3. Segment de piston selon la revendication 1, dans lequel ledit au moins un canal de segment de piston est une rainure s'étendant radialement à travers le segment de piston, et dans lequel la rainure est une encoche prévue au niveau d'un côté axialement externe du corps de segment.

4. Segment de piston selon l'une quelconque des revendications 2 à 3, dans lequel la section transversale de la rainure augmente sur tout le segment de piston.

5. Segment de piston selon l'une quelconque des revendications 2 à 3, dans lequel la section transversale de la rainure sur tout le segment de piston augmente puis diminue, ou augmente d'abord puis diminue.

6. Segment de piston selon la revendication 1, dans lequel ledit au moins un canal de segment de piston comporte une rainure et au moins un alésage s'étendant axialement, dans lequel la rainure s'étend radialement dans le segment de piston, et dans lequel la rainure est une encoche prévue au niveau d'un côté axialement externe du corps de segment.

7. Segment de piston selon l'une quelconque des revendications 1 à 6, dans lequel ledit segment de piston est un segment de piston segmenté.

8. Soupape destinée à une turbine à vapeur comportant au moins un segment de piston destiné à une soupape de turbine à vapeur, dans laquelle la soupape comprend un piston et un cylindre, et le segment de piston est conçu pour assurer l'étanchéité d'un espace radial entre un piston et un cylindre, dans laquelle
le segment de piston comprend un corps de segment, dans laquelle
le corps de segment comprend un premier segment de chevauchement au niveau d'une première extrémité du corps de segment, un segment central, et un second segment de chevauchement au niveau d'une seconde extrémité du corps de segment, dans laquelle
les premier et second segments de chevauchement ont chacun une section transversale qui est inférieure à une section transversale du segment central du corps de segment, et dans laquelle
les premier et second segments de chevauchement sont conçus pour se chevaucher au moins partiellement dans une direction circonférentielle, et chaque segment de piston est disposé dans un logement du piston ou du cylindre,
dans laquelle chaque paire dudit logement et dudit segment de piston comporte au moins un élément du groupe qui comporte : le segment de piston selon l'une quelconque des revendications 1 à 7, et le logement comprenant au moins un canal destiné à un écoulement de fuite contournant le segment de piston, le canal s'étendant à partir d'un espace situé radialement entre le piston et le cylindre au niveau d'un côté haute pression vers un espace situé radialement entre le piston et le cylindre au niveau d'un côté basse pression et étant destiné à la commande d'une charge et / ou l'étanchéité du segment de piston.

9. Soupape destinée à une turbine à vapeur selon la revendication 8 comportant deux, trois ou plusieurs ou au moins 5, au moins 10, ou au moins 24 segments de piston.

10. Soupape destinée à une turbine à vapeur selon la revendication 9, dans laquelle, pour chacune de ladite paire, au moins un élément du groupe qui comporte :
• ledit au moins un canal de segment de piston destiné à un écoulement de fuite à travers le segment de piston pour la commande d'une charge et / ou l'étanchéité du segment de piston, et
• ledit au moins un canal destiné à un écoulement de fuite contournant le segment de piston,
est conçu pour maintenir une même charge de pression sur chacun dudit segment de piston.

11. Soupape selon l'une quelconque des revendications 8 à 10, dans laquelle la soupape est une vanne papillon.

12. Diffuseur de soupape comportant le segment de piston selon l'une quelconque des revendications 1 à 7.

13. Turbine à vapeur comprenant la soupape selon l'une quelconque des revendications 8 à 11 ou le diffuseur
de soupape selon la revendication 12.

14. Centrale à combustibles fossiles, à énergies renouvelables, de valorisation énergétique des déchets, à cycle combiné ou nucléaire comportant la turbine à vapeur selon la revendication 13.
